# EUROPÄISCHE PATENTANMELDUNG

(11) **EP 4 660 495 A1**
(43) Veröffentlichungstag der Anmeldung: **10.12.2025**
(21) Anmeldenummer: 25180138.7
(22) Anmeldetag: 02.06.2025
(51) Int. Cl.: F16K 11/087

(54) **KUGELSEKTORVENTIL**

(30) Priorität: 05.06.2024 DE 102024115647
(71) Anmelder: Schubert & Salzer Control Systems GmbH, 85053 Ingolstadt (DE)
(72) Erfinder: Wolf, Reiner, 86609 Donauwörth (DE)
(74) Vertreter: Canzler & Bergmeier Patentanwälte Partnerschaft mbB

(57) **Zusammenfassung**

Die Erfindung betrifft ein Kugelsektorventil (1) mit einem Ventilgehäuse (10) und einem in dem Ventilgehäuse (10) drehbar um eine Drehachse (31) gelagerten Drosselorgan (30), das als hohlkörperförmiger Kugelsektor ausgebildet ist, wobei im Drosselorgan (30) ein Strömungskanal (39) verläuft, wobei das Kugelsektorventil (1) als 3-Wegeventil mit einem ersten, zweiten und dritten Anschluss (12, 16, 20) ausgebildet ist und wobei das Drosselorgan (30) genau zwei in den Strömungskanal (39) mündende Öffnungen (34, 36), nämlich eine erste Öffnung (34) und eine zweite Öffnung (36), aufweist, wobei diese beiden Öffnungen (34, 36) sich gegenüberliegen und unterschiedliche Öffnungsquerschnitte aufweisen. Das Kugelsektorventil (1) zeichnet sich dadurch aus, das es mit einer ersten und zweiten Endstellung des Drosselorgans (30) ausgebildet ist.

## Beschreibung

Die vorliegende Erfindung betrifft ein Kugelsektorventil mit einem Ventilgehäuse und einem in dem Ventilgehäuse drehbar um eine Drehachse gelagerten Drosselorgan, das als hohlkörperförmiger Kugelsektor ausgebildet ist, wobei im Drosselorgan ein Strömungskanal verläuft, wobei das Kugelsektorventil als 3-Wegeventil mit einem ersten, zweiten und dritten Anschluss ausgebildet ist und wobei das Drosselorgan genau zwei in den Strömungskanal mündende Öffnungen, nämlich eine erste Öffnung und eine zweite Öffnung, aufweist, wobei diese beiden Öffnungen sich gegenüberliegen und unterschiedliche Öffnungsquerschnitte aufweisen.

Kugelsektorventile sind Regelventile, die häufig in industriellen Anwendungen verwendet werden, um den Durchfluss von Flüssigkeiten und Gasen zu steuern. Sie sind eine spezielle Form von Kugelventilen, bei denen allerdings keine Vollkugel verwendet wird, sondern ein hohlkörperförmiges Drosselorgan, Kugelsektor genannt, das in dem Ventilgehäuse um eine Drehachse drehbar gelagert ist. Der den Hohlkörper bildende segmentierte Ausschnitt des Drosselorgans stellt hierbei den Strömungskanal dar.

Kugelsektorventile sind als 2-Wege-Ventile bekannt, bei denen das Gehäuse einen ersten und einen zweiten Anschluss aufweist. Durch Drehen des Drosselorgans, d.h. des Kugelsektors, mittels eines Antriebs verändern sich die Öffnungsquerschnitte, durch die das Medium fließen kann, so dass eine präzise Steuerung des Durchflusses ermöglicht wird.

Aus der DE 10 2019 126 035 B4 ist eine Ventilvorrichtung bekannt, die als 3-Wegeventil nach dem Oberbegriff des Anspruchs 1 ausgebildet ist. In einem zylindrischen Ventilgehäuse ist ein um 360° frei drehbares hohlkugelförmiges Drosselorgan mit zwei sich gegenüberliegenden Öffnungen angeordnet. Ein erster Anschluss dient als Fluidzuführpfad, während ein zweiter und ein dritter Anschluss als Fluidabführpfade ausgebildet sind. Wenn das Drosselorgan den ersten Anschluss zur Fluidzuführung versperrt, sind entweder beide Fluidabführpfade offen oder es wird einer der beiden anderen Fluidpfade blockiert.

Aufgabe der vorliegenden Erfindung ist es, ein Kugelsektorventil mit einem breiteren Einsatzbereich zur Verfügung zu stellen.

Die Aufgabe wird gelöst durch die Merkmale des Anspruchs 1. Vorteilhafte oder bevorzugte Ausführungen sind Gegenstand der abhängigen Ansprüche.

Vorgeschlagen wird demgemäß ein als 3-Wegeventil ausgebildetes Kugelsektorventil, das eine erste und eine zweite Endstellung des Drosselorgans aufweist, wobei auch Zwischenstellungen des Drosselorgans möglich sind (im Gegensatz zu einem 3/2-Wege-Ventil).

Das als Kugelsektor ausgebildete Drosselorgan weist genau zwei Öffnungen auf, mit denen der Durchfluss durch die drei Anschlüsse präzise geregelt werden kann. Es ist hierbei beispielsweise möglich, dass durch einen Anschluss ein Medium in das Ventil einströmt und durch einen oder zwei Anschlüsse ausströmt. Die Zwischenstellungen des Drosselorgans, d.h. die Stellungen zwischen dessen beiden Endstellungen, können derart ausgebildet sein, dass das Medium in einer Strömungsrichtung durch einen einzigen Anschluss einströmt und durch zwei Anschlüsse ausströmt, während es in den Endstellungen des Drosselorgans bevorzugt ist, dass das Medium nur durch einen einzigen Anschluss ausströmt. Auch ist es möglich, dass ein Medium durch zwei Anschlüsse einströmt (wobei das Drosselorgan dann vorzugsweise eine Zwischenstellung einnimmt) und durch einen Anschluss ausströmt. Prinzipiell ist eine Anströmung von allen drei Anschlüssen her möglich, wobei die Durchströmungsrichtung an den Anschlüssen beliebig ist. Insgesamt erlaubt das erfindungsgemäße Kugelsektorventil einen präzise zu steuernden Durchfluss eines Mediums.

Besonders bevorzugt sind die beiden Endstellungen des Drosselorgans durch Drehung des Drosselorgans um 90° einstellbar. Das Drosselorgan lässt sich besonders bevorzugt lediglich um 90° zwischen den beiden Endstellungen drehen, wobei es in den dazwischenliegenden Winkellagen Zwischenstellungen einnimmt. Beispielsweise können der Öffnungsquerschnitt des zweiten und des dritten Anschlusses bei 45°-Stellung des Drosselorgans gleich groß sein. Alternativ oder zusätzlich sind die drei Anschlüsse T-förmig zueinander angeordnet. Wenn die Längsachsen des zweiten und des dritten Anschlusses einen Winkel von 90° bilden, ist das Drosselorgan besonders bevorzugt ebenfalls nur um 90° zu drehen, um das Drosselorgan zwischen den beiden Endstellungen hin und her überführen zu können.

Vorteilhaft ist es, wenn die Öffnungskonturen und die Lage der beiden Öffnungen derart aufeinander abgestimmt sind, dass ein Volumendurchfluss durch das Ventilgehäuse, ausgedrückt als Summe der kᵥ-Werte des Kugelsektorventils, in allen möglichen Durchströmrichtungen und in allen Stellungen des Drosselorgans weniger als 20%, vorzugsweise weniger als 15%, besonders bevorzugt weniger als 10%, beispielsweise weniger als 5%, schwankt. Es wird hierdurch eine im Wesentlichen bzw. in engen Grenzen konstante Durchflussleistung, entsprechend einem im Wesentlichen bzw. in engen Grenzen konstanten kᵥ-Wert, durch das Ventil garantiert, so dass beispielsweise die Pumpleistung einer das Medium durch das Ventil befördernden Pumpe bzw. der Volumenfluss durch das Ventil bei Änderungen der Durchströmrichtung durch Verstellung des Drosselorgans nicht angepasst werden muss. Die Formulierung "im Wesentlichen konstant" ist vorliegend als konstanter Wert einschließlich Schwankungen dieses Werts um weniger als 20% zu verstehen.

Eine konstante Durchflussleistung bedeutet, dass bei konstanten Druckverhältnissen an den jeweiligen drei Anschlüssen die Summe der in das Ventil einströmenden Volumina und damit auch der ausströmenden Volumina in allen Stellungen des Drosselorgans im Wesentlichen gleich bleibt. Wird das Drosselorgan gedreht, so dass beispielsweise die zweite Öffnung des Drosselorgans nun einen Durchfluss durch den dritten Anschluss anstelle des zweiten Anschlusses ermöglicht, bedeutet die Forderung nach einer im Wesentlichen konstanten Durchflussleistung, ausgedrückt als im Wesentlichen konstanter kᵥ-Wert, dass der sich beim besagten Drehen des Drosselorgans kontinuierlich verkleinernde durchströmte Ausschnitt am zweiten Anschluss einem korrespondierend größer werdenden durchströmten Ausschnitt am dritten Anschluss gegenübersteht. Diese Forderung ist von der Geometrie des Öffnungsquerschnitts der zweiten Öffnung des Drosselorgans zu erfüllen.

Besonders bevorzugt weist der Innenraum des Ventilgehäuses eine hohlkugelähnliche Grundform auf. Somit kann der Innenraum des Ventilgehäuses den Strömungsanforderungen beim Einfließen und Ausfließen von Fluid durch die Anschlüsse und die Öffnungen des Drosselorgans optimal angepasst werden. Insbesondere ist es möglich, den Innenraum derart zu formen, dass das Fluid gezielt umgelenkt wird, um den erfindungsgemäßen Durchfluss durch die Öffnungen des Drosselorgans zu realisieren.

Es ist bevorzugt, dass der Öffnungsquerschnitt der zweiten Öffnung und vorzugsweise auch der Öffnungsquerschnitt der ersten Öffnung nicht kreisförmig sind.

Weiterhin ist es vorteilhaft, wenn der Öffnungsquerschnitt der zweiten Öffnung in Drehrichtung des Drosselorgans eine größere Erstreckung aufweist als senkrecht zu dieser Drehrichtung. Es hat sich gezeigt, dass mit dieser Maßnahme die Durchflussleistung durch das Ventil präzise und vorteilhafterweise mit einer im Wesentlichen konstant bleibenden Durchflussmenge eingestellt werden kann.

Mit Vorteil weist der Öffnungsquerschnitt der zweiten Öffnung in Drehrichtung des Drosselorgans eine größere Länge auf als der jeweilige Durchmesser des zweiten und des dritten Anschlusses. Überragt der Öffnungsquerschnitt der zweiten Öffnung den jeweiligen Öffnungsquerschnitt des zweiten und des dritten Anschlusses in Drehrichtung des Drosselorgans, d.h. die den jeweiligen Ventilsitz des zweiten und dritten Anschlusses definierende Dichtfläche, kann aufgrund dieser breiten Ausführung der zweiten Öffnung gewährleistet werden, dass in den Zwischenstellungen des Drosselorgans ein Durchfluss gleichzeitig durch beide Anschlüsse ermöglicht wird.

Vorzugsweise ist der Öffnungsquerschnitt der zweiten Öffnung achsensymmetrisch zu einer auf der Kugelsektoroberfläche auf einem Längengrad laufenden Spiegelachse ausgebildet. Die Bezeichnung Längengrad bedeutet vorliegend, dass die Drehachse des Drosselorgans bzw. Kugelsektors und des Längengrads in einer Ebene liegen (vergleichbar mit den Längengraden der Erdkugel). Mit anderen Worten ist die zweite Öffnung symmetrisch entlang eines Längengrads geteilt. Die zweite, achsensymmetrische Öffnung kann hierbei beispielsweise rautenförmig, rechteckig, quadratisch, oval oder kreisförmig sein. Auch sind Abwandlungen bzw. Mischformen dieser Geometrien möglich. Vorhandene Ecken dieser Öffnungskonturen sind vorzugsweise abgerundet, um eine Wirbelentstehung im Medium möglichst zu unterdrücken.

In Bezug auf das unmittelbar zuvor Ausgeführte hat es sich als besonders vorteilhaft erwiesen, wenn der Öffnungsquerschnitt der zweiten, achsensymmetrischen Öffnung rautenförmig oder rautenähnlich mit zudem vorzugsweise abgerundeten Ecken ausgebildet ist. Versuche mit dieser Konstellation haben gezeigt, dass eine im Wesentlichen konstante Durchflussleistung, entsprechend einem im Wesentlichen konstanten kᵥ-Wert, erzielt werden kann, wobei Schwankungen von weniger als 10% über aller Stellungen des Drosselorgans hinweg ermöglicht werden.

Bei einer diesbezüglich vorteilhaften Ausführungsform mit rautenförmiger zweiter Öffnung liegt deren kürzere Diagonale in einer Ebene mit der Drehachse des Drosselorgans. Die kürzere der beiden Symmetrieachsen der Raute liegt demgemäß mit Vorteil auf einem Längengrad.

Der Öffnungsquerschnitt der ersten Öffnung ist mit Vorzug im Wesentlichen rechteckig, insbesondere quadratisch, und hierbei mit besonderem Vorteil mit abgerundeten Ecken und geschwungenen Seitenkanten ausgebildet.

Vorzugsweise ist der Öffnungsquerschnitt der ersten Öffnung größer als der Öffnungsquerschnitt der zweiten Öffnung, vorzugsweise um mehr als 30%, beispielsweise um mehr als 50% oder 75%. Es ist hierbei bevorzugt, dass das durch die erste Öffnung einfließende Medium ungehindert und in allen Stellungen des Drosselorgans, insbesondere in seinen beiden Endstellungen, in das bzw. aus dem Drosselorgan fließen kann.

Allgemein ist es von Vorteil, wenn die erste Öffnung in beiden Endstellungen und in allen Zwischenstellungen des Drosselorgans mit dem ersten Anschluss in Fluidverbindung steht. Mit anderen Worten ist in diesem Fall die erste Öffnung immer für einen Fluiddurchlass, d.h. Ein- oder Auslass, geöffnet.

Insbesondere bevorzugt ist, dass das Ventil keine Schließstellung aufweist, d.h. das Ventil in jeder Stellung des Drosselorgans einen Mediendurchfluss gestattet. Die Öffnungskonturen der beiden Öffnungen des Drosselorgans und deren Lage sind entsprechend auf diese bevorzugte Ausgestaltung angepasst.

Es hat sich als vorteilhaft erwiesen, wenn eine Verbindungslinie durch die Mittelpunkte der beiden Öffnungsquerschnitte die Drehachse schneidet. Die Mittelpunkte der beiden Öffnungen des Drosselorgans liegen sich hierbei direkt gegenüber, wobei die direkte Linie zwischen diesen beiden Mittelpunkten die Drehachse schneidet und hierbei vorzugsweise in einem rechten Winkel.

Vorzugsweise lässt sich das Drosselorgan aus der einen Endstellung um 90° in die andere Endstellung drehen und von dort 90° in die entgegengesetzte Richtung wieder in die ursprüngliche Endstellung drehen. Diese beiden entgegengesetzten Richtungen werden vorliegend beide zusammengefasst als "Drehrichtung" bezeichnet.

Mit Vorteil steht die zweite Öffnung in der ersten Endstellung des Drosselorgans mit dem zweiten, aber nicht mit dem dritten Anschluss und in der zweiten Endstellung mit dem dritten, aber nicht mit dem zweiten Anschluss in Fluidverbindung. Sowohl in der ersten als auch der zweiten Endstellung des Drosselorgans fließt Medium bzw. Fluid durch einen einzigen Anschluss in das Ventil und durch einen einzigen anderen Anschluss wieder heraus. Der hierbei jeweils nicht beteiligte Anschluss, d.h. entweder der zweite oder der dritte Anschluss, wird hierbei durch das Drosselorgan blockiert. Diese Konstruktion erlaubt es, einen auf die jeweiligen Bedürfnisse angepassten kontrollierten und präzise zu steuernden Durchfluss des Mediums zu realisieren.

Der Öffnungsquerschnitt der ersten Öffnung liegt hierbei vorzugsweise in beiden Endstellungen und in den Stellungen zwischen den beiden Endstellungen vollständig frei.

Es ist bevorzugt, dass alle drei Anschlüsse einen kreisrunden Öffnungsquerschnitt aufweisen, die zudem vorzugsweise denselben Durchflussquerschnitt aufweisen, um die angestrebte im Wesentlichen konstante Durchflussleistung in allen Stellungen des Drosselorgans und in allen Durchflussrichtungen zu ermöglichen. Zudem ist eine solche Ausführung der Standard bei Industrieventilen. Von daher sind die Anschlussmöglichkeiten sehr breit.

Es kommt einer präzisen und reibungsoptimierten Funktion des Ventils zugute, wenn das Drosselorgan in zwei sich gegenüberliegenden Lagerstellen gelagert ist. Hierfür bieten sich beispielsweise Lagerzapfen an, die von außen durch entsprechende Öffnungen im Ventilgehäuse geführt sind und im Drosselorgan lagern. Hierdurch können die am Drosselorgan angreifenden Kräfte in optimierter Weise aufgenommen werden. Dies können herkömmliche Ventile mit nur einer Lagerstelle für das Drosselorgan nicht leisten.

Es ist bevorzugt, dass ein am Ventilgehäuse montierbarer oder montierter Antrieb zum Verstellen der Winkellage des Drosselorgans um die Drehachse vorgesehen ist, der vorzugsweise am Ventilgehäuse anflanschbar oder angeflanscht ist. Auf diese Weise ist der Antrieb in unmittelbarer Nähe des Drosselorgans angeordnet. Lange Kraftübertragungswege sind somit nicht vorhanden.

Der Antrieb zum Drehen des Drosselorgans kann als elektrischer, manueller, hydraulischer oder pneumatischer Antrieb ausgebildet sein. Auch Kombinationen dieser Antriebsarten sind möglich.

Mit besonderem Vorteil ist der Antrieb auf zwei sich gegenüberliegenden Seiten des Ventilgehäuses montierbar, vorzugsweise auf beiden Seiten der die Drehachse definierenden Lagerwelle. Hierdurch wird eine große Flexibilität erreicht, so dass enge Bauräume oder komplexe Einbausituationen gemeistert werden können.

Mit Vorteil liegen die Mittelpunkte der drei Anschlüsse in einer Ebene, wobei die Abtriebswelle des Antriebs senkrecht zu dieser Ebene am Ventilgehäuse montierbar oder montiert ist. Diese Ausführung ist geometrisch konsequent und sichert eine exakte Montage und Funktion des Ventils.

Weitere Vorteile der Erfindung sind in dem nachfolgenden Ausführungsbeispiel beschrieben. Es zeigen:
- **Figur 1a,1b**: eine perspektivische und eine Vorderansicht eines Kugelsektorventils mit einem oberseitig angebrachten Antrieb (und einer alternativen Antriebsposition an der Unterseite);
- **Figur 2a,2b**: eine perspektivische Rückansicht und eine perspektivische Vorderansicht einer ersten Ausführungsform eines als Kugelsektor ausgebildeten Drosselorgans;
- **Figur 3a-3c**: eine Vorderansicht, eine Seitenansicht und eine Rückansicht des Drosselorgans der Fig. 2a-2b;
- **Figur 4a-4c**: Draufsichten auf Längsschnitte durch das Kugelsektorventil der Fig. 1a-1b bei verschiedenen Stellungen des Drosselorgans;
- **Figur 5a-5c**: perspektivische Draufsichten auf die Längsschnitte der Fig. 4a-4c (mit nicht geschnittenem Drosselorgan);
- **Figur 6**: ein Diagramm mit den kᵥ-Werten bei Durchströmung jeweils eines Anschlusses allein und in Summe, und
- **Figur 7**: eine Rückansicht einer zweiten Ausführungsform des Drosselorgans mit einer alternativen Öffnungskontur der zweiten Öffnung.

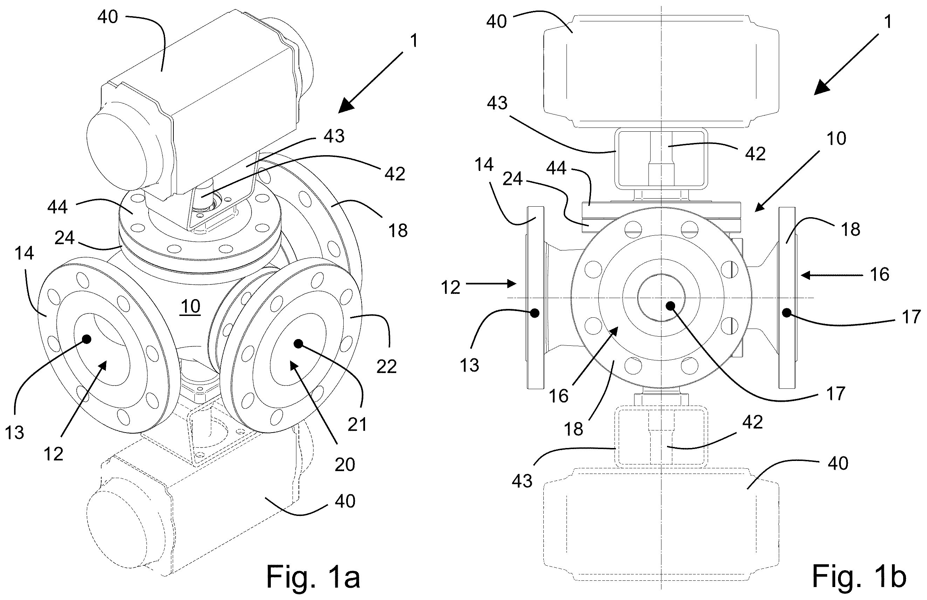

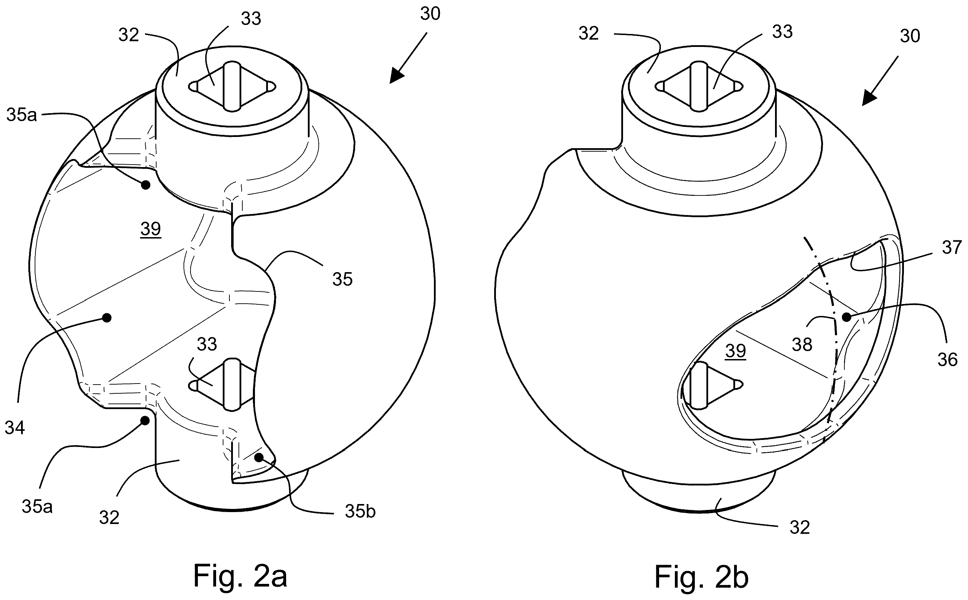

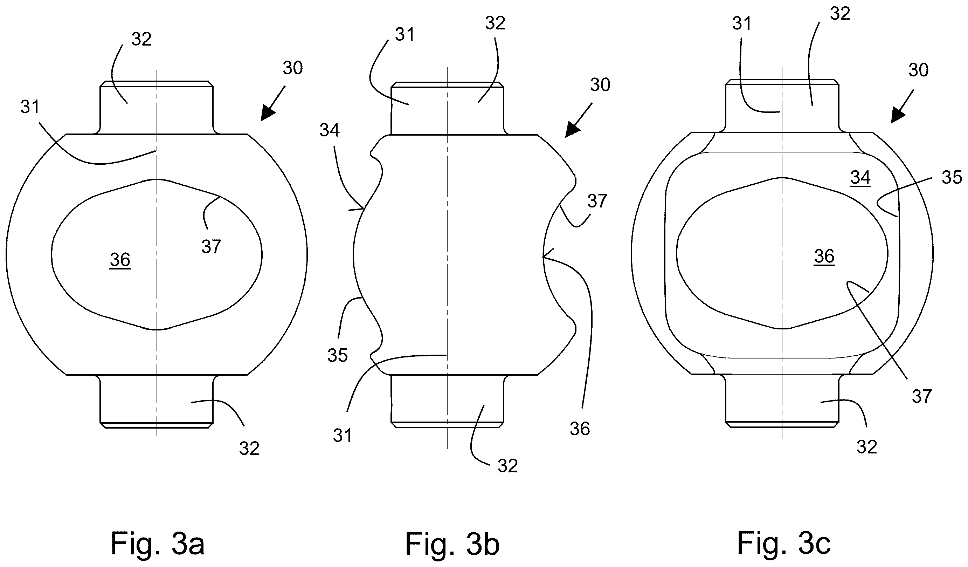

Die Figuren 1, 4 und 5 zeigen ein Kugelsektorventil 1 (vorliegend auch kurz als Ventil 1 bezeichnet), das als 3-Wege-Ventil ausgebildet ist. Das Kugelsektorventil 1 weist ein Ventilgehäuse 10 mit einem hohlkugelähnlichen Innenraum auf, das einen ersten Anschluss 12, einen zweiten Anschluss 16 und einen dritten Anschluss 20 umfasst, die T-förmig zueinander angeordnet sind und alle einen kreisrunden Durchflussquerschnitt 13, 17, 21 gleicher Größe aufweisen. Der leicht gegenüber einer Hohlkugel deformierte Innenraum des Ventilgehäuses 10 ist in Richtung des ersten Anschlusses 12 hin versetzt. In dem Ventilgehäuse 10 ist ein um eine Drehachse 31 zwischen zwei Endstellungen um 90° hin und her drehbares Drosselorgan 30 angeordnet, das in den Fig. 2 und 3 genauer dargestellt ist. Das Drosselorgan 30 ist als hohlkörperförmiger Kugelsektor ausgebildet und befindet sich im Schnittpunkt der Achsen der drei Anschlüsse 12, 16, 20. Das Drosselorgan 30 ist demnach gegenüber dem Innenraum des Ventilgehäuses 10 versetzt und befindet sich in der Mitte des Kugelsektorventils 1. Es weist eine erste Öffnung 34 und eine zweite Öffnung 36 auf, die sich gegenüberliegen, wobei eine Verbindungslinie der Mittelpunkte der beiden Öffnungen 34, 36 die Drehachse 31 in einem rechten Winkel schneidet. Dieser Schnittpunkt 31 ist auch der Schnittpunkt der Achsen der drei Anschlüsse 12, 16, 20.

Gemäß den Fig. 1a und 1b ist ein Antrieb 40 an einem kastenartigen Verbindungsstück 43 befestigt, das seinerseits lösbar mit einem Flansch 44 verbunden ist. Der Flansch 44 ist an einem Flansch 24, der auf der Oberseite des Ventilgehäuses 10 vorgesehen ist, verschraubt. Der Antrieb 40 treibt einen Lagerzapfen 42 an, der durch eine Öffnung in den Flanschen 24, 44 und dem Ventilgehäuse 10 geführt ist und in einer Lageraufnahme 33 einer Lagerstelle 32 des Drosselorgans 30 lagert. Die Lagerstellen 32 mit ihrer jeweiligen Lageraufnahme 33 in dem Drosselorgan sind auch in der Fig. 2 zu erkennen.

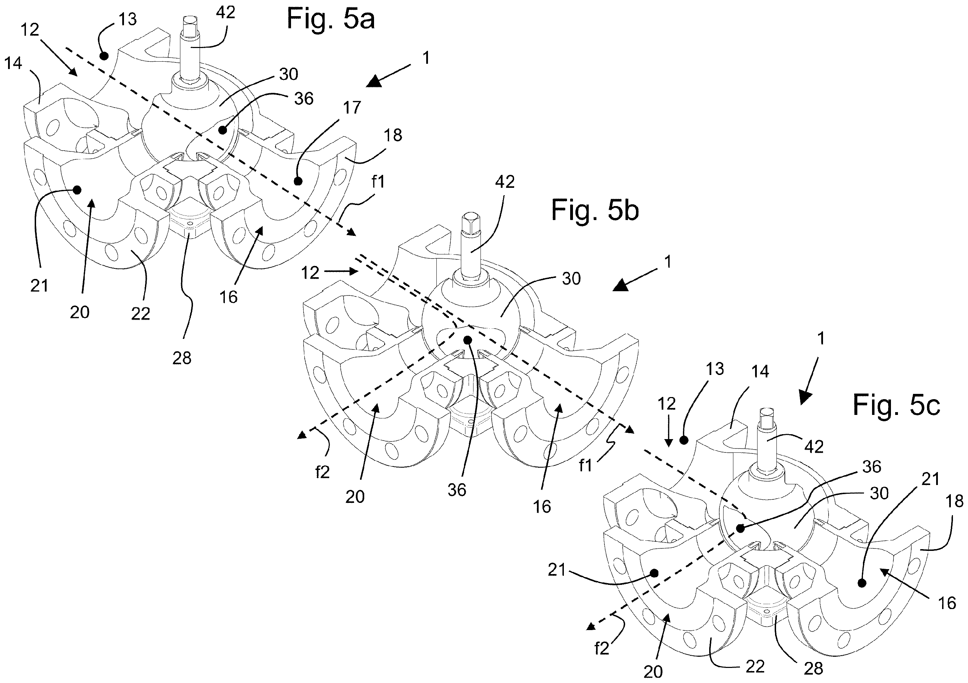

Auf der dem Antrieb 40 gegenüberliegenden Seite des Ventilgehäuses 10 ist das Drosselorgan 30 mittels eines kürzeren Lagerzapfens (verdeckt) ebenfalls gelagert, wobei dieser kürzere Lagerzapfen allerdings nicht aktiv angetrieben wird. In den Fig. 5a-5c ist ein Widerlager 28 auf der Unterseite des Ventilgehäuses 10 zu erkennen, in dem das eine Ende dieses kürzeren Lagerzapfens gelagert ist. Das andere Ende des kürzeren Lagerzapfens lagert wiederum in einer Lageraufnahme 33 einer Lagerstelle 32 an der Unterseite des Drosselorgans 30 (s. Fig. 2). Das Widerlager 28 kann hier auf der Innenseite eines Blindflansches vorgesehen sein, der seinerseits an einen am Ventilgehäuse 10 vorgesehenen Flansch angeflanscht sein kann.

Die vorgenannte zweiseitige Lagerung des Drosselorgans 30 verteilt die auf das Drosselorgan 30 wirkenden Kräfte in einer den Verschleiß mindernden und die Reibung reduzierenden Art und Weise.

In der Fig. 1b ist gezeigt, dass der Antrieb 40 auch auf der gegenüberliegenden Seite angebracht werden kann (der Antrieb 40 ist hier gestrichelt dargestellt). Die zwei alternativen Anschlussmöglichkeiten erlauben ein Höchstmaß an Flexibilität beim Einbau des Kugelsektorventils 1.

Die drei vorgenannten Anschlüsse 12, 16, 20 weisen jeweils einen kreisrunden Durchflussquerschnitt 13, 17, 21 auf, die alle denselben Durchmesser haben. Zudem ist an jedem der Anschlüsse 12, 16, 20 ein Flansch 14, 18, 22 vorgesehen, um insbesondere Anschlussrohre (nicht dargestellt) anflanschen zu können.

In den Fig. 2a-2b und 3a-3c ist eine erste Ausführungsform des Drosselorgans 30 dargestellt. In den perspektivischen Draufsichten der Fig. 2a und 2b ist die kugelförmige Ausgestaltung des Drosselorgans 30 mit einem Strömungskanal 39 zu erkennen, der die erste Öffnung 34 mit der zweiten Öffnung 36 verbindet. Dieser Strömungskanal 39 nimmt große Teile des Innenvolumens des Drosselorgans 30 ein.

Die erste Öffnung 34 weist eine Öffnungskontur 35 auf, die grob als Rechteck bzw. Quadrat bezeichnet werden kann, allerdings zu den beiden Lagerstellen 32 hin jeweils einen Ausschnitt 35a sowie vier abgerundete Ecken 35b und einwärts bogenförmig verlaufende Seitenkanten aufweist. In der Rückansicht der Fig. 3c ist zu erkennen, dass der Öffnungsquerschnitt der ersten Öffnung 34 ca. 80-90% des Kugelquerschnitts einnimmt.

Gegenüber der ersten Öffnung 34 ist die zweite Öffnung 36 vorgesehen, deren Öffnungsquerschnitt in Drehrichtung des Drosselorgans 30 eine größere Erstreckung aufweist als senkrecht zur Drehrichtung. Speziell ist die Öffnungskontur 37 des Drosselorgans 30 gemäß der in den Fig. 1-5 dargestellten Ausführungsform eine Rautenform mit vier gleich langen Seiten und zwei sich im rechten Winkel schneidenden Diagonalen. Die Ecken dieser Raute sind abgerundet, wobei die horizontal beabstandeten Ecken der Raute sogar als Kreisbögen ausgebildet sind. Die Rautenform gemäß der Fig. 3 könnte auch als Abwandlung eines Ovals bezeichnet werden, das an den vertikal beabstandeten mittigen Bereichen ausgestülpt ist.

Eine verallgemeinerte vorteilhafte Eigenschaft des Öffnungsquerschnitts der zweiten Öffnung ist ihre Achsensymmetrie in Bezug zu einer auf einem Längengrad der Kugelsektoroberfläche laufenden Spiegelachse 38 (s. Fig. 2b). Im vorliegenden Ausführungsbeispiel der Fig. 2 und 3 bedingt diese Achsensymmetrie, dass die kürzere Symmetrieachse der rautenförmigen zweiten Öffnung 36 mit der Spiegelachse 38 zusammenfällt und zudem in einer Ebene mit der Drehachse 31 des Drosselorgans 30 liegt.

Insbesondere der Fig. 3c ist zu entnehmen, dass der Öffnungsquerschnitt der ersten Öffnung 34 größer als der zweite Öffnungsquerschnitt der zweiten Öffnung 36, vorliegend um ca. 100%.

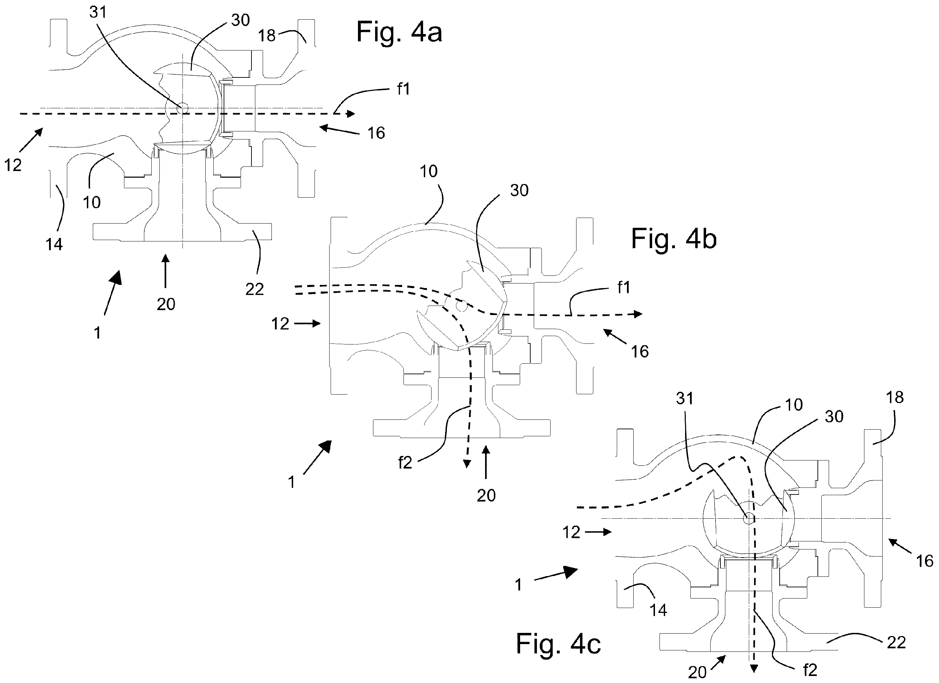

Im in das Ventilgehäuse 10 eingebauten Zustand des Drosselorgans 30 steht die erste Öffnung 34 in allen Stellungen des Drosselorgans 30 mit dem ersten Anschluss 12 in Fluidverbindung. Wie den Fig. 4 und 5 zu entnehmen ist, fließt also stets Medium in den Drosselkörper 30 hinein und auch stets durch den zweiten und/oder den dritten Anschluss 16, 20 wieder hinaus, oder umgekehrt. Mit anderen Worten weist das Ventil 1 keine Schließstellung auf.

Hierzu trägt bei, dass die Öffnungskonturen 35, 37 und die Lage der beiden Öffnungen 34, 36 auch in Zwischenstellungen des Drosselorgans 30 stets einen Durchfluss durch einen oder beide Anschlüsse 16, 20 ermöglichen.

Hierbei ist die zweite Öffnung 36 in der ersten Endstellung des Drosselorgans 30 mit dem zweiten Anschluss 16 (s. Pfeil f1), aber nicht mit dem dritten Anschluss 20 in Fluidverbindung, wie dies in den Fig. 4a und 5a gezeigt ist. In der zweiten Endstellung gemäß der Fig. 4c und 5c steht die zweite Öffnung 36 hingegen mit dem dritten Anschluss 20 (s. Pfeil f2), aber nicht mit dem zweiten Anschluss 16 in Fluidverbindung.

In den in Fig. 4b und 5b gezeigten Zwischenstellungen, die das Drosselorgan 30 genau in der Mitte, d.h. in 45°-Stellung, zwischen den beiden Endstellungen zeigen, fließen bei konstanten, d.h. an den drei Anschlüssen 12, 16, 20 gleichbleibenden, Druckverhältnissen nahezu gleiche Volumina durch den zweiten Anschluss 16 (s. Pfeil f1) und den dritten Anschluss 20 (s. Pfeil f2). Dies hat ihre Ursache in der achsensymmetrischen Ausgestaltung der zweiten Öffnung 36 und der Lage der Symmetrie- bzw. Spiegelachse 38 im Winkel von 45° zwischen den beiden Endstellungen des Drosselorgans 30.

Wie aus den Fig. 4a, 4c, 5a und 5c zu ersehen ist, weist der Öffnungsquerschnitt der zweiten Öffnung 36 in Drehrichtung des Drosselorgans 30 eine größere Länge auf als der jeweilige Durchmesser des zweiten und des dritten Anschlusses 16, 20. Diese Ausgestaltung bedingt unter anderem, dass einerseits Medium über die gesamte Breite des zweiten bzw. dritten Anschlusses ein- bzw. aus dem jeweiligen Anschluss 16, 20 fließen kann und andererseits bei der vorliegenden Konstellation in den Zwischenstellungen des Drosselorgans 30 ein Durchfluss durch beide Anschlüsse 16, 20 ermöglicht ist. In den genannten Figuren ist auch zu erkennen, dass die obere und untere Kante der Öffnungskontur 37 der zweiten Öffnung 36 im Wesentlichen mit dem oberen und unteren Rand des zweiten bzw. dritten Anschlusses 16, 20 abschließen. Mit anderen Worten liegt der Durchflussquerschnitt 17 bzw. 21 des zweiten bzw. dritten Anschlusses 16, 20 in der entsprechenden Endstellung des Drosselorgans 30 im Wesentlichen frei.

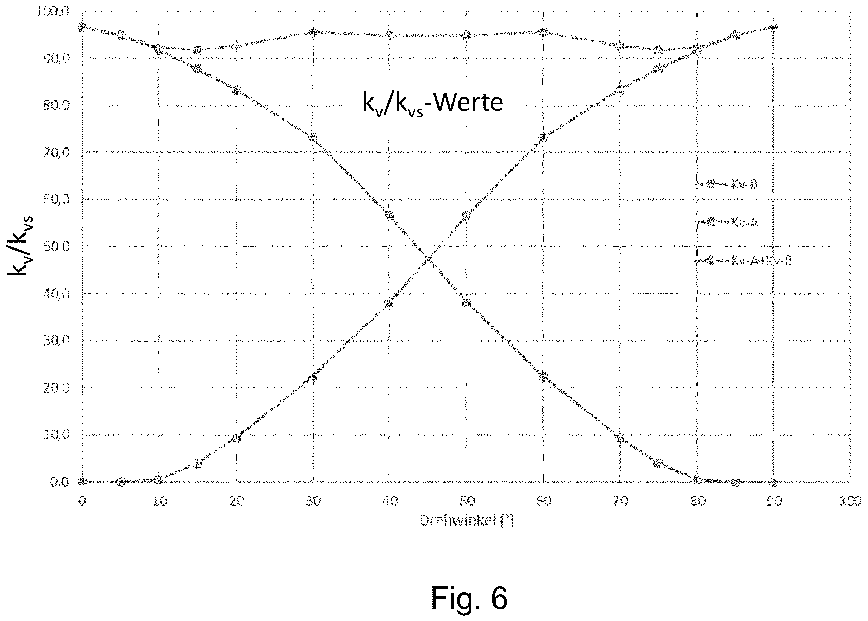

Die Fig. 6 zeigt ein Diagramm mit drei verschiedenen kᵥ-Werten, aufgetragen über den Drehwinkel des Drosselorgans 30 um die Drehachse 31. Die y-Achse des Diagramms bezeichnet hierbei den kᵥ-Wert in Prozent vom maximalen kᵥ-Wert, wobei dieser maximale Wert auch als kᵥₛ-Wert bezeichnet wird (daher die Beschriftung kᵥ/kᵥₛ an der y-Achse). Die im Diagramm gezeigten kᵥ-Werte sind somit unabhängig von der jeweiligen Nennweite der drei Anschlüsse 12, 16, 20. Wie oben ausgeführt, beträgt der Drehwinkel zwischen den beiden Endstellungen des Drosselorgans 30 90°. Der kᵥ-Wert gibt an, wie viel Volumenstrom (Volumendurchfluss) Wasser (in Kubikmeter pro Stunde) durch ein Ventil fließt, wenn ein Druckverlust von 1 bar über dem Ventil herrscht. Er ist somit ein Maß für die Durchflusskapazität des Ventils und wird auch als Durchflusskennzahl bezeichnet.

In der Fig. 6 gibt die von links unten nach rechts oben laufende Kurve den Volumenstrom bzw. Volumendurchfluss, ausgedrückt als kᵥ-Wert, durch die zweite Öffnung 36 und durch den zweiten Anschluss 16 in Abhängigkeit vom Drehwinkel des Drosselorgans 30 an. Bei einem Drehwinkel von 0° liegt die zweite Öffnung 36 direkt dem dritten Anschluss 20 gegenüber, während kein Durchfluss durch den zweiten Anschluss 16 ermöglicht ist. Der kᵥ-Wert durch den zweiten Anschluss 16 beträgt demnach in dieser - nach der obigen Definition - zweiten Endstellung 0. Wird nun das Drosselorgan 30 um die Drehachse 31 fortlaufend gedreht, fließt sukzessive mehr Medium durch den zweiten Anschluss 16 (und weniger durch den dritten Anschluss 20), bis die Durchflussmenge bzw. der Volumenstrom bei 90°, d.h. in der ersten Endstellung des Drosselorgans 30, durch den zweiten Anschluss 16 maximal ist. In dieser ersten Endstellung ist dann der dritte Anschluss 20 blockiert.

Die in der Fig. 6 von links oben nach rechts unten führende Kurve gibt den Volumenstrom bzw. Volumendurchfluss in Form des kᵥ-Werts durch die zweite Öffnung 36 und durch den dritten Anschluss 20 in Abhängigkeit vom Drehwinkel des Drosselorgans 30 an. Bei wiederum einem Drehwinkel von 0°, welcher der zweiten Endstellung des Drosselorgans 30 entspricht, liegt die zweite Öffnung 36 direkt dem dritten Anschluss 20 gegenüber, so dass ein maximaler Durchfluss durch diesen dritten Anschluss 20 ermöglicht ist. Wird nun das Drosselorgan 30 um die Drehachse 31 fortlaufend gedreht, fließt sukzessive weniger Medium durch den dritten Anschluss 20 (und mehr durch den zweiten Anschluss 16), bis die Durchflussmenge bzw. der Volumenstrom bei 90°, d.h. in der ersten Endstellung des Drosselorgans 30, durch den dritten Anschluss 20 0 ist. In dieser ersten Endstellung ist dann der dritte Anschluss 20 blockiert, und das Medium fließt ausschließlich durch den zweiten Anschluss 16.

Die dritte kᵥ-Kurve in der Fig. 6 gibt die Summe der anderen beiden, zuvor diskutierten Volumenströme, also die Summe der beiden kᵥ-Werte, an. Es ist erkennbar, dass der gesamte Volumenstrom (gesamte Volumendurchfluss) bzw. die Summe der kᵥ-Werte über alle Stellungen des Drosselorgans 30 kaum schwankt, sondern vielmehr im Wesentlichen konstant ist. Unter "im Wesentlichen konstant" sind gemäß der vorliegenden Offenbarung Schwankungen von weniger als 20% zu verstehen, vorzugsweise weniger als 10%. Gemäß der Fig. 6 liegen die Schwankungen der Summe der kv-Werte im Bereich von 5%. Das Ausführungsbeispiel der Fig. 1-5 ermöglicht somit einen im Wesentlichen konstanten Volumenstrom, ausgedrückt als im Wesentlichen konstante Summe des kᵥ-Werts des Kugelsektorventils 1, bei allen Stellungen des Drosselorgans 30, einschließlich seiner beiden Endstellungen. Bei Betrieb des Kugelsektorventils 1 muss somit beispielsweise keine Anpassung der Pumpleistung einer das Medium durch das Ventil 1 befördernden Pumpe in Relation zur Stellung des Drosselorgans 30 vorgenommen werden.

Somit ist das Kugelsektorventil vorliegend derart ausgestaltet und sind die Öffnungskonturen 35, 37 der beiden Öffnungen 34, 36 und die Lage der beiden Öffnungen 34, 36 derart aufeinander abgestimmt, dass der Volumendurchfluss bzw. der Volumenstrom, in Form der Summe der kᵥ-Werte des Kugelsektorventils 1, durch das Ventilgehäuse 10 in allen Durchströmrichtungen und allen Stellungen des Drosselorgans 30 um weniger als 10%, vorliegend sogar nur um ca. 5%, schwankt.

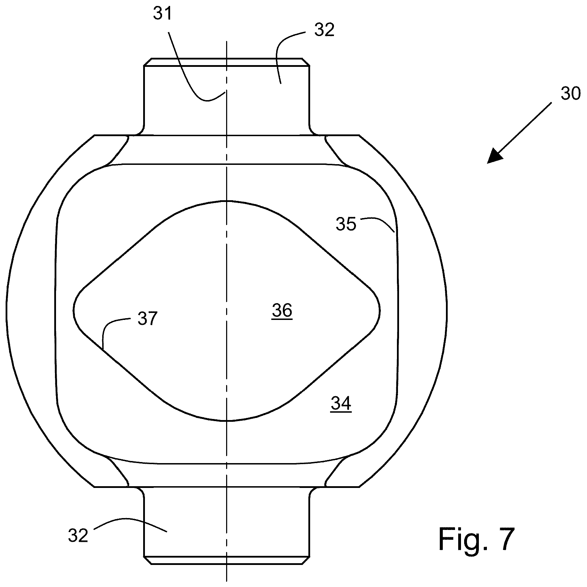

Bei der nachfolgenden Beschreibung des in Figur 7 dargestellten alternativen Ausführungsbeispiels werden für Merkmale, die im Vergleich zu dem in dem Fig. 2 und 3 dargestellten ersten Ausführungsbeispiel in ihrer Ausgestaltung und/oder Wirkweise gleich sind, dieselben Bezugszeichen verwendet. Sofern nichts Abweichendes erläutert wird, entspricht deren Ausgestaltung und/oder Wirkweise der Ausgestaltung und/oder Wirkweise der vorstehend bereits beschriebenen Merkmale.

Das zweite Ausführungsbeispiel des Drosselorgans 30 gemäß der Rückansicht der Fig. 7 weist eine zweite Öffnung 36 mit einer alternativ abgewandelten Rautenform auf. Auch hier weist die rautenförmige bzw. rautenähnliche zweite Öffnung 36 vier gleich lange Seiten mit zwei sich im rechten Winkel schneidenden Diagonalen auf. In dem zweiten Ausführungsbeispiel sind jedoch die vertikal beabstandeten Ecken der Raute im Wesentlichen als Kreisbögen ausgebildet, während die horizontal beabstandeten Ecken in viel geringerem Maße abgerundet sind. Auch mit dieser Ausführung der zweiten Öffnung 36 (bei gleichbleibendem Öffnungsquerschnitt der ersten Öffnung 34) konnte in Versuchen eine nahezu konstante Durchflussleistung, gleichbedeutend mit einem nahezu konstanten kᵥ-Wert, durch das Ventil 1 in allen Stellungen des Drosselorgans 30 mit vergleichbaren Ergebnissen wie in der Fig. 6 nachgewiesen werden.

In anderen, nicht dargestellten Ausführungsbeispielen kann die zweite Öffnung oval-, kreis- oder rechteckförmig sein oder geometrische Mischformen von diesen (einschließlich von Bestandteilen einer Raute) aufweisen.

### Bezugszeichenliste

- 1: Kugelsektorventil
- 10: Ventilgehäuse
- 12: erster Anschluss
- 13: Durchflussquerschnitt (des ersten Anschlusses)
- 14: Flansch am ersten Anschluss
- 16: zweiter Anschluss
- 17: Durchflussquerschnitt (des zweiten Anschlusses)
- 18: Flansch am zweiten Anschluss
- 20: dritter Anschluss
- 21: Durchflussquerschnitt (vom dritten Anschluss)
- 22: Flansch am dritten Anschluss
- 24: Flansch für Antrieb
- 28: Widerlager
- 30: Drosselorgan (Kugelsektor)
- 31: Drehachse
- 32: Lagerstelle
- 33: Lageraufnahme
- 34: erste Öffnung
- 35: Öffnungskontur der ersten Öffnung
- 35a: Ausschnitt
- 35b: abgerundete Ecke
- 36: zweite Öffnung
- 37: Öffnungskontur der zweiten Öffnung
- 38: Spiegelachse (auf Längengrad)
- 39: Strömungskanal
- 40: Antrieb
- 42: Lagerzapfen
- 43: Verbindungsstück
- 44: Flansch (Antrieb)
- f1: erste Durchströmrichtung
- f2: zweite Durchströmrichtung

## Patentansprüche

1. Kugelsektorventil (1) mit einem Ventilgehäuse (10) und einem in dem Ventilgehäuse (10) drehbar um eine Drehachse (31) gelagerten Drosselorgan (30), das als hohlkörperförmiger Kugelsektor ausgebildet ist, wobei im Drosselorgan (30) ein Strömungskanal (39) verläuft, wobei das Kugelsektorventil (1) als 3-Wegeventil mit einem ersten, zweiten und dritten Anschluss (12, 16, 20) ausgebildet ist und wobei das Drosselorgan (30) genau zwei in den Strömungskanal (39) mündende Öffnungen (34, 36), nämlich eine erste Öffnung (34) und eine zweite Öffnung (36), aufweist, wobei diese beiden Öffnungen (34, 36) sich gegenüberliegen und unterschiedliche Öffnungsquerschnitte aufweisen, **dadurch gekennzeichnet,**
**dass** das Kugelsektorventil (1) mit einer ersten und zweiten Endstellung des Drosselorgans (30) ausgebildet ist.

2. Kugelsektorventil (1) nach Anspruch 1, **dadurch gekennzeichnet, dass** die beiden Endstellungen des Drosselorgans (30) durch Drehung des Drosselorgans (30) um 90° einstellbar sind und/oder dass die drei Anschlüsse (12, 16, 20) T-förmig zueinander angeordnet sind.

3. Kugelsektorventil (1) nach Anspruch 1 oder 2, **dadurch gekennzeichnet, dass** die Öffnungskonturen (35, 37) und die Lage der beiden Öffnungen (34, 36) derart aufeinander abgestimmt sind, dass der Volumendurchfluss durch das Ventilgehäuse (10), ausgedrückt als Summe der kᵥ-Werte des Kugelsektorventils (1), in allen Durchströmrichtungen und allen Stellungen des Drosselorgans (30) um weniger als 20%, vorzugsweise weniger als 15%, besonders bevorzugt weniger als 10%, beispielsweise weniger als 5%, schwankt.

4. Kugelsektorventil (1) nach mindestens einem der vorhergehenden Ansprüche, **dadurch gekennzeichnet, dass** der Innenraum des Ventilgehäuses (10) eine hohlkugelähnliche Grundform aufweist.

5. Kugelsektorventil (1) nach mindestens einem der vorhergehenden Ansprüche, **dadurch gekennzeichnet, dass** der Öffnungsquerschnitt der zweiten Öffnung (36) in Drehrichtung des Drosselorgans (30):
eine größere Erstreckung aufweist als senkrecht zu dieser Drehrichtung; und/oder
eine größere Länge aufweist als der jeweilige Durchmesser des zweiten und des dritten Anschlusses (16, 20), und/oder
achsensymmetrisch zu einer auf einem Längengrad der Kugelsektoroberfläche laufenden Spiegelachse (38) ausgebildet ist.

6. Kugelsektorventil (1) nach mindestens einem der vorhergehenden Ansprüche, **dadurch gekennzeichnet,**
**dass** der Öffnungsquerschnitt der zweiten Öffnung (36) und vorzugsweise auch der Öffnungsquerschnitt der ersten Öffnung (34) nicht kreisförmig ist, oder
**dass** der Öffnungsquerschnitt der zweiten Öffnung (36) rautenförmig oder rautenähnlich mit vorzugsweise abgerundeten Ecken ausgebildet ist, wobei die kürzere Symmetrieachse der rautenförmigen zweiten Öffnung (36) vorzugsweise in einer Ebene mit der Drehachse (31) des Drosselorgans (30) liegt, oder
**dass** der Öffnungsquerschnitt der zweiten Öffnung (36) oval-, kreis-, rauten- oder rechteckförmig, insbesondere quadratisch, ausgebildet ist, wobei Ecken vorzugsweise abgerundet sind.

7. Kugelsektorventil (1) nach mindestens einem der vorhergehenden Ansprüche, **dadurch gekennzeichnet, dass** der Öffnungsquerschnitt der ersten Öffnung (34) im Wesentlichen rechteckig, insbesondere quadratisch, vorzugsweise mit abgerundeten Ecken und geschwungenen Seitenkanten, ist, und/oder
dass der Öffnungsquerschnitt der ersten Öffnung (34) größer ist als der Öffnungsquerschnitt der zweiten Öffnung (36), vorzugsweise um mehr als 30%, beispielsweise um mehr als 50% oder 75%.

8. Kugelsektorventil (1) nach mindestens einem der vorhergehenden Ansprüche, **dadurch gekennzeichnet, dass** die erste Öffnung (34) in beiden Endstellungen und in allen Zwischenstellungen des Drosselorgans (30) mit dem ersten Anschluss (12) in Fluidverbindung steht.

9. Kugelsektorventil (1) nach mindestens einem der vorhergehenden Ansprüche, **dadurch gekennzeichnet, dass** die Öffnungskonturen (35, 37) und die Lage der beiden Öffnungen (34, 36) derart aufeinander abgestimmt sind, dass das Kugelsektorventil (1) keine Schließstellung aufweist.

10. Kugelsektorventil (1) nach mindestens einem der vorhergehenden Ansprüche, **dadurch gekennzeichnet, dass** eine Verbindungslinie durch die Mittelpunkte der Öffnungsquerschnitte der beiden Öffnungen (34, 36) die Drehachse (31) schneidet.

11. Kugelsektorventil (1) nach mindestens einem der vorhergehenden Ansprüche, **dadurch gekennzeichnet, dass** die zweite Öffnung (36) in der ersten Endstellung des Drosselorgans (30) mit dem zweiten Anschluss (16), aber nicht mit dem dritten Anschluss (20) und in der zweiten Endstellung mit dem dritten Anschluss (20), aber nicht mit dem zweiten Anschluss (16) in Fluidverbindung steht.

12. Kugelsektorventil (1) nach dem vorhergehenden Anspruch, **dadurch gekennzeichnet, dass** der Öffnungsquerschnitt der ersten Öffnung (34) in beiden Endstellungen und in den Stellungen zwischen den beiden Endstellungen vollständig freiliegt.

13. Kugelsektorventil (1) nach mindestens einem der vorhergehenden Ansprüche, **dadurch gekennzeichnet, dass** die drei Anschlüsse (12, 16, 20) einen kreisrunden Öffnungsquerschnitt aufweisen, die zudem vorzugsweise denselben Durchflussquerschnitt aufweisen.

14. Kugelsektorventil (1) nach mindestens einem der vorhergehenden Ansprüche, **dadurch gekennzeichnet, dass** das Drosselorgan (30) in zwei sich gegenüberliegenden Lagerstellen (32) gelagert ist, insbesondere mittels Lagerzapfen (42).

15. Kugelsektorventil (1) nach mindestens einem der vorhergehenden Ansprüche, **gekennzeichnet durch** einen am Ventilgehäuse (10) montierbaren oder montierten Antrieb (40) zum Verstellen der Winkellage des Drosselorgans (30) um die Drehachse (31), wobei der Antrieb (40) vorzugsweise am Ventilgehäuse (10) anflanschbar oder angeflanscht ist, wobei der Antrieb (40) vorzugsweise auf zwei sich gegenüberliegenden Seiten des Ventilgehäuses (10) montierbar ist.
